# EUROPÄISCHE PATENTSCHRIFT

(11) **EP 3 724 970 B1**
(45) Veröffentlichungstag und Bekanntmachung des Hinweises auf die Patenterteilung: **20.09.2023**
(21) Anmeldenummer: 18826927.8
(22) Anmeldetag: 03.12.2018
(51) Int. Cl.: H02K 3/34, H02K 15/10

(54) **VERFAHREN UND VORRICHTUNG ZUM HERSTELLEN VON NUTISOLIERUNGEN FÜR WINDUNGSNUTEN EINES BAUTEILS EINER ELEKTRISCHEN MASCHINE**
METHOD AND APPARATUS FOR PRODUCING SLOT INSULATIONS FOR WINDING SLOTS OF A COMPONENT OF AN ELECTRICAL MACHINE
PROCÉDÉ ET DISPOSITIF DE FABRICATION D'ISOLATIONS DE GORGES POUR DES GORGES D'ENROULEMENT D'UN COMPOSANT D'UNE MACHINE ÉLECTRIQUE

(30) Priorität: 11.12.2017 DE 102017129474
(43) Veröffentlichungstag der Anmeldung: 21.10.2020
(73) Patentinhaber: Grob-Werke GmbH & Co. KG, 87719 Mindelheim (DE)
(72) Erfinder: HENGGE, Manfred, 88299 Leutkirch (DE); POHL, Steffen, 87772 Pfaffenhausen (DE)
(74) Vertreter: KASTEL Patentanwälte PartG mbB
(86) Internationale Anmeldenummer: PCT/DE2018/100984
(87) Internationale Veröffentlichungsnummer: WO 2019/114870

(56) Entgegenhaltungen:
- EP-A1- 0 174 513
- EP-A1- 0 938 183
- CN-A- 101 841 215
- US-A- 3 579 818
- US-A- 3 742 596
- US-A- 3 926 421
- US-B1- 6 564 444
- US-B1- 6 618 928

## Beschreibung

Die Erfindung betrifft ein Verfahren zum Herstellen von Nutisolierungen für Windungsnuten eines Bauteils einer elektrischen Maschine. Weiter betrifft die Erfindung eine Vorrichtung zum Herstellen von Nutisolierungen für Windungsnuten eines Bauteils einer elektrischen Maschine.

Zum technologischen Hintergrund der Erfindung wird auf folgende Literaturstelle verwiesen:
[1] US 6 282 773 B1
[2] EP 0 174 513 A1
[3] US 3 926 421 A
[4] US 6 618 928 B1

Die vorliegende Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen. Hierzu ist es bekannt, Spulenwicklungen bereitzustellen, die in radial offene Nuten eines Haltekörpers, wie insbesondere dem Hauptkörper eines Stators oder eines Rotors, eingefügt werden können. Um einen besonders hohen Füllgrad zu erreichen, werden die Spulenwicklungen insbesondere aus Drähten mit rechteckigem Querschnitt hergestellt.

Zur elektrischen Isolation der einzelnen Spulenwicklungen ist jede der Nuten mit einer Nutisolation zu versehen.

Um die Geometrie der Nutisolation herzustellen gibt es verschiedene Verfahren. Das Ziel ist, eine anpassbare Geometrie in kurzer Taktzeit einzuschieben. Insbesondere kommen folgende Varianten zum Einsatz, die beide in der Literaturstelle [1] angesprochen sind:
1) Nutisolation von der Breitrolle und
2) Nutisolation von der Schmalrolle

Bei der Variante von der Breitrolle wird ein Streifen Isolationspapier von einer Vorratsrolle abgeschnitten. Anschließend wird in einem Takt die komplette Geometrie geprägt. Die Breite der Rolle bestimmt am Ende auch die Länge der Isolation.

### Vorteile:

• Es lassen sich vergleichsweise kurze Taktzeiten realisieren
• Geringer Bauraumbedarf
• Kostengünstige Anlage

### Nachteile:

• geringe Flexibilität - Eine Anpassung der Nutisolationslänge erfordert eine Umrüstung der Anlage auf eine Vorratsrolle mit geänderter Breite

Ein Verfahren nach der Variante 2) ist in der Literaturstelle [1] ausführlich beschrieben. Dabei wird als Isolierung Papier abgerollt, anschließend geschnitten; es wird ein Kragen geprägt und umgelegt, das Isolationspapier wird anschließend geprägt und in den Stator ausgestoßen.

### Vorteile dieses Verfahren sind:

• Änderung der Nutisolationslänge im Prozess auch bei Losgröße=1 möglich Nachteile sind:
• Lange Taktzeiten
• Großer Bauraumbedarf
• Teure Anlage

Aus der Literaturstelle [2] sind ein Verfahren und eine Vorrichtung zum Auskleiden der Nuten von Stator- oder Rotorblechpaketen für elektrische Maschinen mit Isolierhülsen bekannt, wobei bei jedem Arbeitstakt von einem Isoliermaterial-Vorratsstreifen die Abwicklungslänge von zwei Isolierhülsen abgetrennt wird, anschließen beide Isolierhülsen gleichzeitig geformt und axial in Nuten des Stator- oder Rotorblechpakets eingeschoben werden.

Aus der Literaturstelle [3] sind eine Vorrichtung und ein Verfahren zum Einschieben von Isolierstreifenstücken in einen zweipoligen Stator bekannt. Dabei werden drei Statorkerne an entsprechenden Aufnahmen eines sich drehenden Halters angeordnet, wobei der Transport der Statorkerne taktweise zwischen drei Stationen erfolgt, von denen eine erste Station eine Aufnahmestation zur Aufnahme eines neuen Statorkernes ist, eine zweite Station eine Arbeitsstation ist, wo die Isolierstreifenstücke geformt und eingefügt werden und eine dritte Station eine Abgabestation ist, wo der fertig isolierte Stator abgeführt wird. Damit die beiden Isolierstreifen für die beiden Windungsnuten des zweipoligen Statorkerns eingefügt werden kann, wird jeder Statorkern unter Drehung zweimal an der Arbeitsstation durchgeführt, wo in einem ersten Durchgang der eine Isolierstreifen und in einem zweiten Durchgang der andere Isolierstreifen eingeführt wird.

Auch die Literaturstelle [4] betrifft ein Verfahren und eine Vorrichtung zum Einfügen von Isolierstreifen in einen Stator. Die Vorrichtung weist eine Formanordnung, einen Transfermechanismus und eine Ladeanordnung auf. Zunächst wird ein Streifen Isoliermaterial auf eine Unterlage gelegt und dann mit einem Stempel sowohl geschnitten als auch geformt und in eine Aufnahme der Transporteinrichtung gepresst. Die Transporteinrichtung dreht sich um 180° und das gefaltete Isolierstreifen wird in eine Aufnahmenut der Ladeanordnung überführt. Dies wird solange wiederholt, bis alle Aufnahmenuten der Ladeanordnung mit Isolierstreifen befüllt sind. Anschließend pausieren die Formanordnung und die Transporteinrichtung und beenden temporär den Betrieb, während zunächst ein Stator positioniert wird und dann mittels eines Pneumatik-Stempels eine Überführung aller Isolierstreifen gleichzeitig in die Windungsnuten des Stators erfolgt.

Die Erfindung hat sich zur Aufgabe gestellt, ein Verfahren und eine Vorrichtung zum Herstellen von Nutisolierungen für Windungsnuten eines Bauteils einer elektrischen Maschine zu schaffen, mit denen kürzere Taktzeiten erzielbar sind.

Vorzugsweise sollen ein kleinerer Bauraum und ein kostengünstigerer Aufbau erzielbar sein.

Vorzugsweise soll eine möglichst optimale Isolation im Prozess flexibel anpassbar sein.

Zum Lösen dieser Aufgabe schafft die Erfindung ein Verfahren nach Anspruch 1 sowie eine Vorrichtung mit den Merkmalen des Anspruchs 9.

Vorteilhafte Ausgestaltungen sind Gegenstand der Unteransprüche.

Die Erfindung schafft gemäß einem Aspekt davon ein Verfahren zum Herstellen von Nutisolierungen für Windungsnuten eines Bauteils einer elektrischen Maschine, umfassend
a) Bereitstellen eines Streifens Isoliermaterials,
c) Abschneiden eines Isolierungsstreifenstücks von dem Streifen,
d) Formen des Isolierungsstreifenstücks zur Anpassung an die Form der Windungsnut und
e) Einschieben des geformten Isolierungsstreifenstücks in die Windungsnut, wobei zumindest die Schritte d) und e) für wenigstens zwei in unterschiedliche Windungsnuten einzuschiebende Isolierungsstreifenstücke parallel durchgeführt werden.

Dabei erfolgt das Formen eines ersten Isolierungsstreifenstücks an einer Station, während gleichzeitig in einer anderen Station ein zuvor geformtes weiteres Isolierungsstreifenstück in die Windungsnut eingeführt wird.

Es ist bevorzugt, dass die Schritte c), d) und e) für wenigstens drei jeweils in unterschiedliche Windungsnuten einzuschiebende Isolierungsstreifenstücke parallel durchgeführt werden.

Eine bevorzugte Ausgestaltung des Verfahrens umfasst die Schritte Formen des Isolierungsstreifenstücks in einer von mehreren Formen und Führen der mehreren Formen auf einer Umlaufbahn, die wenigstens eine Aufnahmestation zum Aufnehmen des Isolierungsstreifenstücks und eine Abgabestation zum Einschieben des geformten Isolierungsstreifenstücks in die Windungsnut enthält.

Eine bevorzugte Ausgestaltung des Verfahrens umfasst:
Verwenden zumindest einer ersten, einer zweiten und einer dritten Form, die getaktet auf der Umlaufbahn zumindest von der Aufnahmestation zu einer Formstation, von der Formstation zu der Abgabestation und von der Abgabestation zu der Aufnahmestation verfahren werden.

Eine bevorzugte Ausgestaltung des Verfahrens umfasst:
Verwenden einer vierten Form, wobei die erste bis vierte Form getaktet zwischen den Stationen auf der Umlaufbahn verfahren werden, wobei die Stationen noch zwischen der Aufnahmestation und der Formstation eine Positionierstation umfassen.

Es ist bevorzugt, dass das Abschneiden an der Aufnahmestation erfolgt.

Es ist bevorzugt, dass Formen mit einem ersten und einem zweiten Formteil verwendet werden und dass das erste und das zweite Formteil an zumindest einer der Stationen auf der Umlaufbahn relativ zueinander zur Formveränderung des Isolierungsstreifenstück bewegt werden.

Es ist bevorzugt, dass die Herstellung in Bearbeitungstakten erfolgt, wobei zwei, drei, vier oder mehr Bearbeitungstakte parallel durchgeführt werden, wobei die Bearbeitungstakte ausgewählt werden aus einer Gruppe von Bearbeitungstakten, die enthält:
- Formen wenigstens einer Längskante oder mehrerer Längskanten des Streifens oder des Isolierungsstreifenstücks;
- Abschneiden des Isolierungsstreifenstücks und/oder Umschlagen eines Kragens an einer Vorderkante des Streifens und/oder an einer Hinterkante des Isolierungsstreifenstücks;
- Positionieren des Isolierungsstreifenstücks in der Form;
- Prägen des Isolierungsstreifenstücks mittels eines Prägestempels in der Form, um die Nutisolierung zu formen, und
- Verschieben des geformten Isolierungsstreifenstücks aus der Form in die Windungsnut.

Es ist bevorzugt, dass das Verfahren den Schritt enthält:
b) Formen wenigstens eines Längskantenbereichs des Streifens oder des Isolierungsstreifenstücks.

Es ist bevorzugt, dass Schritt c) enthält: Auswählen der sich in Bewegungsrichtung des Streifens erstreckenden Isolierungsstreifenstücklänge des abzuschneidenden Isolierungsstreifenstücks abhängig von der axialen Länge der Windungsnut; und dass Schritt e) enthält: Einschieben des geformten Isolierungsstreifenstücks in einer sich in Richtung der Isolierungsstreifenstücklänge erstreckenden Einschieberichtung.

Gemäß einem weiteren Aspekt schafft die Erfindung eine Vorrichtung zum Herstellen von Nutisolierungen für Windungsnuten eines Bauteils einer elektrischen Maschine, umfassend:
eine Bereitstelleinrichtung zum Bereitstellen eines Streifens Isoliermaterials,
eine Schneideinrichtung zum Abschneiden eines Isolierungsstreifenstücks von dem Streifen,
eine Formeinrichtung zum Formen des Isolierungsstreifenstücks;
eine Einschiebeeinrichtung zum Einschieben des geformten Isolierungsstreifenstücks in die Windungsnut, und
eine Transporteinrichtung mit mehreren Halteelementen zum Halten je wenigstens eines Isolierungsstreifenstückes, wobei die Halteelemente auf einer Umlaufbahn mit mehreren Stationen zur gleichzeitigen Bearbeitung mehrerer Isolierungsstreifenstücke bewegbar sind.

Dabei ist die Vorrichtung dazu ausgebildet, dass das Formen eines ersten Isolierungsstreifenstücks an einer Station der Vorrichtung erfolgt, während gleichzeitig in einer anderen Station der Vorrichtung ein zuvor geformtes weiteres Isolierungsstreifenstück in die Windungsnut eingeführt wird.

Es ist bevorzugt, dass die Transporteinrichtung als Halteelemente mehrere Formen der Formeinrichtung aufweist.

Es ist bevorzugt, dass die Transporteinrichtung einen Werkzeugrevolver aufweist oder als solcher ausgebildet ist.

Es ist bevorzugt, dass die Transporteinrichtung dazu ausgebildet ist, die Halteelemente von einer Aufnahmestation zur Aufnahme eines durch die Schneideinrichtung abgeschnittenen Isolierstreifenstücks zu einer Formstation zum Formen des Isolierstreifenstücks durch die Formeinrichtung, von der Formstation zu einer Abgabestation zum Einschieben des geformten Isolierstreifenstücks in die Windungsnut und von der Abgabestation zu der Aufnahmestation zu bewegen.

Es ist bevorzugt, dass die Transporteinrichtung dazu ausgebildet ist, die Halteelemente von einer Aufnahmestation zur Aufnahme eines durch die Schneideinrichtung abgeschnittenen Isolierstreifenstücks zu einer Positionierstation zum Positionieren des Isolierstreifenstücks in einer Form der Formeinrichtung, von der Positionierstation mit der Form zu einer Formstation zum Formen des Isolierstreifenstücks durch die Formeinrichtung, von der Formstation zu einer Abgabestation zum Einschieben des geformten Isolierstreifenstücks in die Windungsnut und von der Abgabestation zu der Aufnahmestation zu bewegen.

Es ist bevorzugt, dass die Transporteinrichtung dazu ausgebildet ist, ein erstes Halteelement von einer ersten Station zu einer zweiten Station auf der Umlaufbahn zu bewegen und gleichzeitig hierzu ein zweites Halteelement von der zweiten Station zu der ersten oder zu einer weiteren Station zu bewegen.

Es ist bevorzugt, dass die Transporteinrichtung ein erstes, ein zweites und ein drittes Halteelement zur gleichzeitigen Bearbeitung von wenigstens drei Isolierstreifenstücken an einer ersten bis dritten Station aufweist.

Es ist bevorzugt, dass die Transporteinrichtung ein erstes, ein zweites, ein drittes und ein viertes Halteelement zur gleichzeitigen Bearbeitung von wenigstens vier Isolierstreifenstücken an einer ersten bis vierten Station aufweist.

Es ist bevorzugt, dass die Schneideinrichtung eine Kragenumschlageinrichtung zum Umschlagen einer Vorderkante des Streifens und/oder einer Hinterkante des abgeschnittenen Streifenstücks aufweist.

Es ist bevorzugt, dass die Formeinrichtung an einer Formstation ein Formelement oder einen Prägestempel aufweist.

Es ist bevorzugt, dass eine Kantenaufstelleinrichtung zum Aufstellen wenigstens einer Längskante des Streifens und/oder des Isolierstreifenstücks vorgesehen ist.

Es ist bevorzugt, dass die Schneideinrichtung zum Abschneiden des Isolierstreifenstücks mit einer von der Länge der zu isolierenden Windungsnut abhängigen Isolierstreifenstücklänge ausgebildet ist.

Es ist bevorzugt, dass die Einschiebeeinrichtung zum Einschieben des geformten Isolierstreifenstücks in einer in Richtung der Isolierstreifenstücklänge gerichteten Einschieberichtung ausgebildet ist.

Es ist bevorzugt, dass jedes Halteelement ein erstes Halteteilelement und ein zweites Halteteilelement aufweist, wobei die Halteteilelemente relativ zueinander bewegbar sind.

Es ist bevorzugt, dass jedes Halteelement an der Transporteinrichtung beweglich gelagert ist.

Es ist bevorzugt, dass eine Halteelement-Antriebseinrichtung zum Antreiben der Relativbewegung der Halteteilelemente bzw. der Bewegung des Halteelements vorgesehen ist.

Es ist bevorzugt, dass die Halteelement-Antriebseinrichtung zum Antreiben der Relativbewegung bzw. Bewegung an einer und/oder vor einer oder mehreren der Stationen ausgebildet ist. Das Halteelement ist somit an dieser und/oder z.B. im Zuge der Bewegung zu dieser Station durch die Halteelement-Antriebseinrichtung angetrieben bewegbar. Insbesondere sind das erste und das zweite Halteelementteilelement dann, wenn sich das Halteelement an der und/oder auf dem Weg zu der entsprechenden Station befindet, durch die Halteelement-Antriebseinrichtung angetrieben relativ zueinander bewegbar.

Die Halteelement-Antriebseinrichtung ist vorzugsweise ein Element aus der Gruppe von Antriebseinrichtungen, die einen aktiven Einzelantrieb, einen separaten Einzelantrieb, einen Aktor, eine Kulissensteuerung, eine feststehende Kulisse und ein Kulissenfolgeelement und ein Koppelgetriebe zum Koppeln der Halteelement-Bewegung oder Halteteilelement-Relativbewegung mit der Bewegung der Transporteinrichtung umfasst.

Bei besonders bevorzugten Ausgestaltungen der Vorrichtung und auch bei bevorzugten, durch diese Ausgestaltungen der Vorrichtung durchführbaren Ausgestaltungen des Verfahrens sind die Halteelemente gesondert angetrieben bewegbar. Gemeint ist hier nicht z.B. eine Rotation der z.B. als Revolver ausgebildeten Transporteinrichtung selbst, sondern ein Antrieb für die Eigenbewegung eines Halteelements, insbesondere im vierten Takt, bei dem z.B. zwei Hälften zusammengeklappt werden können, damit die Isolation die endgültige Form erhält. Jedoch muss der Antrieb für die Eigenbewegung des Halteelements nicht auf das Zusammenklappen im Takt vier beschränkt sein - in anderen Ausgestaltungen können auch die anderen Halteelemente irgendwelche Eigenbewegungen durchführen.

Bei bevorzugten Ausgestaltungen kann der Antrieb der Eigenbewegung eines oder gegebenenfalls auch mehrerer Halteelemente entweder (i) durch einen aktiven und separaten Einzelantrieb erfolgen, oder (ii) durch eine Kulissensteuerung (z.B. feststehende Kulisse) oder ein Kopplungsgetriebe aufgrund der Drehbewegung des Revolvers bewirkt werden.

Im Folgenden werden einige Vorteile und Eigenschaften bevorzugter Ausgestaltungen der Erfindung näher erläutert.

Bei der oben genannten Verfahrensweise 1), dem Abrollen von der Breitrolle, lassen sich gegenüber der Verfahrensweise 2) Schritte einsparen. Die Länge der Isolation bei der Breitrolle wird allerdings durch die Breite der Vorratsrolle vorgegeben. Hier ist keine Anpassung im Prozess möglich. Daher betreffen bevorzugte Ausgestaltungen der Erfindung ein Abrollen von der Schmalrolle und arbeiten nach der Verfahrensweise 2).

Um die Taktzeiten, insbesondere aber nicht nur bei der Verfahrensweise 2) mit der Schmalrolle, zu beschleunigen, ist ein der Erfindung zugrunde liegender Gedanke, die einzelnen Schritte zu entkoppeln und parallel zu schalten.

Bevorzugte Ausgestaltungen der Erfindung betreffen eine Variante des Abrollens von der Schmalrolle. Bei der Variante von der Schmalrolle wird das Isolierstreifenmaterial, z.B. Papier, von einer Vorratsrolle abgerollt (Schritt 1). Vorzugsweise bekommt das Material, z.B. Endlospapier, z.B. durch Sickrollen oder dergleichen vier durchgehende Sicken (Schritt 2). Bei einer bevorzugten Ausgestaltung werden auf der langen Seite Schenkel an der Sicke umgebogen (Schritt 3).

Vorzugsweise wird beim Schneiden (Schritt 4) die Länge der Nutisolation individuell auf Länge abgeschnitten (bereits bei Losgröße=1) und gleichzeitig der Kragen geprägt (Schritt 5).

Weiter umfassen bevorzugte Ausgestaltungen des Verfahrens die Schritte Kragen umlegen (Schritt 6), Isolation bzw. Rücken prägen (Schritt 7), Falten (Schritt 8) und in den Stator ausstoßen (Schritt 9).

Bei einer besonders bevorzugten Ausgestaltung erfolgen durch zeitliche Entkopplung und parallele Anordnung die Schritte 4 bis 9 in vier parallel laufenden Takten gleichzeitig. Dadurch reduziert sich die Taktzeit enorm. Die Anzahl der Antriebe kann hierdurch deutlich reduziert werden was auch die Prozesssicherheit erhöht.

Ein Ausführungsbeispiel wird im Folgenden anhand der beigefügten Zeichnungen näher erläutert. Darin zeigt:
- Fig. 1: eine perspektivische Ansicht eines Streifens Isoliermaterials zur Darstellung eines ersten Schritts eines Verfahrens zum Herstellen von Nutisolierungen für Windungsnuten eines Bauteils einer elektrischen Maschine;
- Fig. 2: eine perspektivische Darstellung des Streifens Isoliermaterials nach Durchführung eines zweiten und eines dritten Schritts des Verfahrens;
- Fig. 3: eine perspektivische Darstellung eines von dem Streifen Isoliermaterials abgeschnittenen Isolierungsstreifenstücks nach Durchführung eines vierten und eines fünften Schritts des Verfahrens;
- Fig. 4: eine perspektivische Darstellung des Isolierungsstreifenstücks nach einem sechsten Schritt des Verfahrens;
- Fig. 5: eine perspektivische Darstellung des Isolierungsstreifenstücks nach einem siebten Schritt des Verfahrens;
- Fig. 6: eine perspektivische Darstellung des Isolierungsstreifenstücks nach einem achten Schritt des Verfahrens;
- Fig. 7: eine perspektivische Darstellung des Isolierungsstreifenstücks und eines Bauteils einer elektrischen Maschine mit Windungsnuten zur Darstellung eines neunten Schritts des Verfahrens;
- Fig. 8: eine schematische perspektivische Übersichtsdarstellung einer Vorrichtung zum Herstellen von Nutisolierungen für Windungsnuten eines Bauteils einer elektrischen Maschine und zur Durchführung des Verfahrens, dessen einzelne Schritte in den Fig. 1 bis 7 dargestellt sind;
- Fig. 9: eine Schnittdarstellung eines Teilbereichs der Vorrichtung mit einem an einer ersten Station befindlichen Halteelement im Rahmen der Durchführung des vierten und fünften Schritts des Verfahrens;
- Fig. 10: eine horizontal geschnittene Darstellung eines Teilbereichs der Vorrichtung gemäß einer Ausführungsform davon, mit einem an einer zweiten Station befindlichen Halteelement zum Halten des Isolierungsstreifenstücks im Rahmen der Durchführung des sechsten Schritts des Verfahrens;
- Fig. 11: eine Draufsicht auf einen Teilbereich der Schnittfläche von Fig. 10 zur weiteren Darstellung des sechsten Schritts;
- Fig. 12: eine Querschnittsdarstellung durch eine Ausführungsform der in Fig. 8 dargestellten Vorrichtung durch eine Transporteinrichtung der Vorrichtung, wobei eine erste und eine vierte Station der Vorrichtung mit einem ersten bis vierten Halteelement in einem Schnitt quer zu einer Drehachse der Transporteinrichtung dargestellt sind; und
- Fig. 13: eine schematische Blockdarstellung einer weiteren Ausführungsform des Verfahrens.

Im Folgenden werden anhand der beigefügten Zeichnungen unterschiedliche Ausführungsformen für ein Verfahren und eine Vorrichtung 20 zum Herstellen von Nutisolierungen 138 für Windungsnuten 14 eines Bauteils 16 einer elektrischen Maschine näher erläutert.

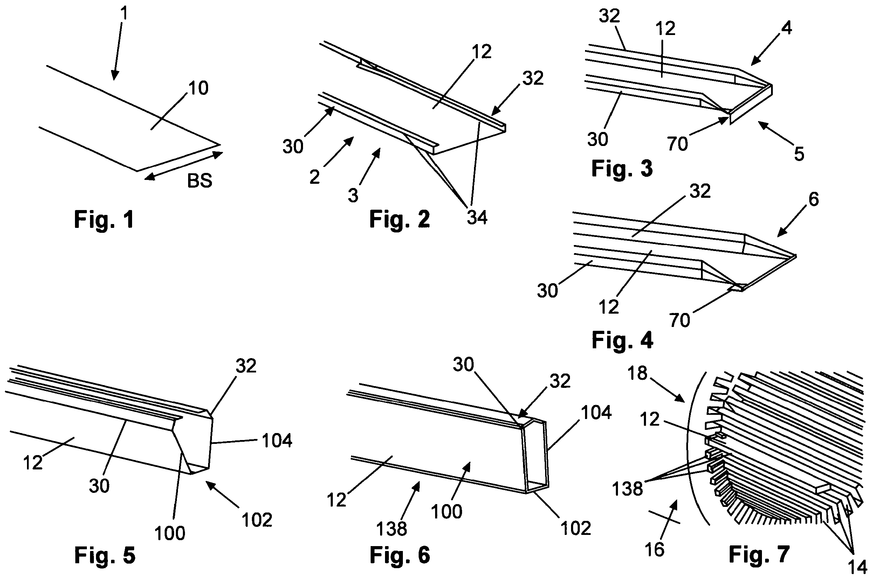

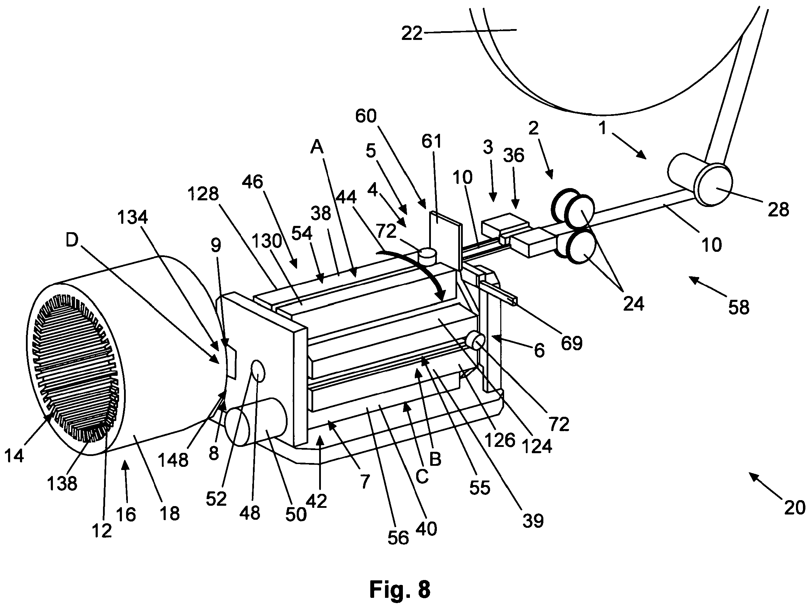

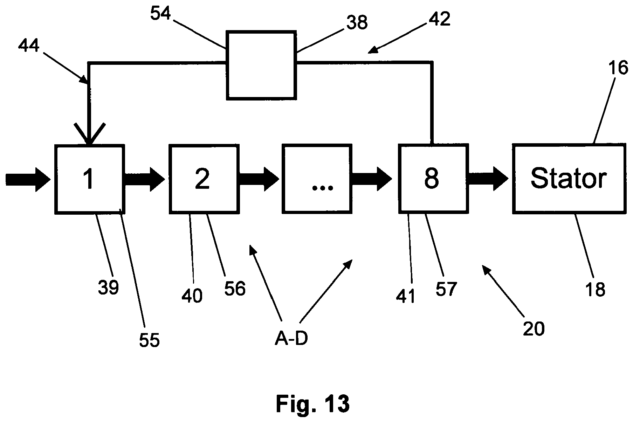

Dabei sind in den Fig. 1 bis 7 Formgebungsschritte bei dem Formen der Nutisolierung 138 aus einem Streifen 10 aus Isoliermaterial gezeigt, in den Fig. 8 bis 12 sind bevorzugte Ausgestaltungen für die Vorrichtung 20 zum Durchführen des Verfahrens schematisch dargestellt und in Fig. 13 ist eine Blockdarstellung für eine Variante der Vorrichtung 20 wiedergegeben.

Bei dem Verfahren wird zunächst ein Streifen 10 aus einem elektrisch isolierenden Isoliermaterial bereitgestellt. Der Streifen 10 ist beispielsweise in den Fig. 1 und 2 sowie in Fig. 8 dargestellt.

Weiter umfasst das Verfahren den Schritt Abschneiden eines Isolierungsstreifenstücks 12 von dem Streifen 10. Das Isolierungsstreifenstück 12 ist beispielsweise in den Fig. 3 bis 7 dargestellt.

Weiter wird in dem Verfahren das Isolierungsstreifenstück 12 zur Anpassung an die Form der Windungsnut 14 geformt, wie dies beispielsweise in den Fig. 5 und 6 dargestellt ist.

Das so geformte Isolierungsstreifenstück 12 wird anschließend, wie z.B. in Fig. 7 dargestellt, in die Windungsnut 14 des Bauteils 16 einer elektrischen Maschine eingeschoben. Das Bauteil 16 ist insbesondere ein Stator 18 einer elektrischen Maschine, wie beispielsweise eines in der Elektromobilität einzusetzenden Elektromotors.

Zur Reduzierung der Taktzeiten und zur Verringerung des Bauraums der Vorrichtung 20 werden zumindest die Schritte des Formens des Isolierungsstreifenstücks 12 und des Einschiebens des geformten Isolierungsstreifenstücks 12 für wenigstens zwei Isolierungsstreifenstücke 12, die in unterschiedliche Windungsnuten 14 einzuschieben sind, parallel durchgeführt. Dabei erfolgt das Formen eines ersten Isolierungsstreifenstücks 12 an einer Station der Vorrichtung 20, während gleichzeitig in einer anderen Station der Vorrichtung 20 ein zuvor geformtes weiteres Isolierungsstreifenstück 12 in die Windungsnut 14 eingeführt wird.

Im Folgenden werden eine bevorzugte Ausführungsform des Verfahrens und bevorzugte Ausführungsform der Vorrichtung 20 anhand der beigefügten Fig. 1 bis 12 näher erläutert.

Zunächst werden hierzu anhand der Fig. 1 bis 7 unterschiedliche mögliche Schritte des Verfahrens und der sich bei diesen Schritten ergebenden Form des Isolierungsstreifenstücks 12 näher erläutert.

Eine bevorzugte Ausführungsform des Verfahrens weist die folgenden Schritte auf:

| | |
|---|---|
| - Erster Schritt 1: | Bereitstellen des Streifens Isoliermaterials, vorzugsweise durch Abrollen eines Papiers von einer als Schmalrolle ausgebildeten Vorratsrolle 22; |
| - Zweiter Schritt 2: | Einbringen einer ersten bis vierten durchgehenden Sicke durch Sickrollen 24; |
| - Dritter Schritt 3: | Umbiegen von Schenkeln 30, 32 auf den langen Seite an der Sicke; |
| - Vierter Schritt 4: | Abschneiden des Isolierungsstreifenstücks 12 von dem Streifen 10; vorzugsweise derart, dass die Länge der Nutisolation individuell entsprechend der Länge der Windungsnut 14 abgeschnitten wird; |
| - Fünfter Schritt 5: | Prägen eines Kragens 70; |
| - Sechster Schritt 6: | Umlegen des Kragens 70; |
| - Siebter Schritt 7: | Prägen des Isolierungsstreifenstücks 12, insbesondere eines Rückens 102 davon |
| - Achter Schritt 8: | Falten des Isolierungsstreifenstücks 10; |
| - Neunter Schritt 9: | Ausstoßen des geformten Isolierungsstreifenstücks 12 in den Stator 18. |

Wie aus den Fig. 8 bis 12 ersichtlich weist eine bevorzugte Ausgestaltung der Vorrichtung 20 eine Bereitstelleinrichtung 58 zum Bereitstellen des Streifens 10

Isoliermaterials, eine Schneideinrichtung 60 zum Abschneiden des Isolierungsstreifenstücks 12 von dem Streifen 10, eine Formeinrichtung 98 zum Formen des Isolierungsstreifenstücks 12, eine Einschiebeeinrichtung 140 zum Einschieben des geformten Isolierungsstreifenstücks 12 in die Windungsnut 14, und eine Transporteinrichtung 42 mit mehreren Halteelementen 38-41 zum Halten je wenigstens eines Isolierungsstreifenstückes 12 auf, wobei die Halteelemente 38-41 auf einer Umlaufbahn 44 mit mehreren Stationen A-D zur gleichzeitigen Bearbeitung mehrerer Isolierungsstreifenstücke 12 bewegbar sind.

Bei einer bevorzugten Ausgestaltung weist die Vorrichtung 20 als Halteelemente 38-41 mehrere Formen 54-57 der Formeinrichtung 98 auf.

Eine erste Station A ist beispielsweise als Aufnahmestation zur Aufnahme eines durch die Schneideinrichtung 60 abgeschnittenen Isolierstreifenstücks 12 ausgebildet. Die Schneideinrichtung 60 ist vorzugsweise ebenfalls an der ersten Station A ausgebildet. Vorzugsweise erfolgt an der ersten Station weiter die Prägung des Kragens 70.

Eine zweite Station B ist beispielsweise als Positionierstation zum Positionieren des Isolierungsstreifenstücks 12 in der an dieser zweiten Station B befindlichen Form 55 der Formeinrichtung 98 ausgebildet. Vorzugsweise wird an dieser zweiten Station B auch der Kragen 70 umgefaltet.

Eine dritte Station C ist vorzugsweise als Formstation zum Formen des Isolierstreifenstücks 12 durch die Formeinrichtung 98 ausgebildet.

Eine vierte Station D ist vorzugsweise als Abgabestation zum Einschieben der fertigen Nutisolierung 138 in die Windungsnut 14 ausgebildet. Insbesondere ist die Einschiebeeinrichtung 140 an der vierten Station D ausgebildet.

Durch die Ausbildung mit vier Stationen ist die Vorrichtung 20 in der Lage, die Bearbeitung des Isolierungsstreifenstücks 12 in vier Takten durchzuführen, so dass durch parallele Durchführung der vier Takten an unterschiedlichen Stationen wenigstens vier Isolierungsstreifenstücke 12 gleichzeitig bearbeitet werden können.

Einzelheiten bevorzugter Ausgestaltungen des Verfahrens und der Vorrichtung werden im Folgenden anhand der Figuren näher erläutert.

Wie in Fig. 8 dargestellt, weist eine mögliche Ausführungsform der Bereitstelleinrichtung 58 eine Vorratsrolle 22 und wenigstens ein Zuführelement, wie z.B. eine Umlenk- und Glättrolle 28 auf. Wie aus Fig. 1 und Fig. 8 ersichtlich wird beim Durchführen des ersten Schritts 1 zunächst die Vorratsrolle 22, hier ausgebildet als Schmalrolle, bereitgestellt. Von dieser wird ein Streifen 10 Isoliermaterial über die Umlenk- und Glättrolle 28, beispielsweise angetrieben durch Antrieb der Umlenk- und Glättrolle 28 und Antrieb von Sickrollen 24 abgerollt.

Vor den Sickrollen 24, die in Fig. 8 dargestellt sind, hat der Streifen 10 die in Fig. 1 dargestellte flache Form. Durch die Bereitstelleinrichtung 58 wird ein Streifen 10 aus elektrisch isolierendem Material, insbesondere Papiermaterial, beispielsweise beschichtet mit Kunststoffmaterial, bereitgestellt.

Die Breite BS des Streifens 10 wird entsprechend der Breite und der Tiefe der Windungsnut 14 so gewählt, dass die Innenfläche der Windungsnut 14 überdeckt werden kann und zusätzlich noch ein erster Schenkel 30 an der einen langen Seite und ein zweiter Schenkel 32 an der anderen langen Seite die offene Seite der Windungsnut 14 überdecken können.

An den in Fig. 8 dargestellten Sickrollen 24 werden eine erste bis vierte Sicke 34 eingebracht. Anschließend werden die Schenkel 30, 32 in einer durch mehrere Formblöcke gebildeten Schenkelumbiegeinrichtung 36 hochgebogen. Die Schenkelumbiegeeinrichtung 36 ist ein Ausführungsbeispiel für eine Kantenaufstelleinrichtung zum Aufstellen von Kanten des Isolierungsstreifenstücks 12.

Die Vorrichtung 20 weist mehrere Halteelemente 38-41 auf, die mittels der Transporteinrichtung 42 auf der Umlaufbahn 44 mit mehreren Stationen A-D taktweise bewegbar sind.

Bei dem dargestellten Ausführungsbeispiel weist die Vorrichtung 20 ein erstes Halteelement 38, ein zweites Halteelement 39, ein drittes Halteelement 40 und ein viertes Halteelement 41 auf, die mittels der Transporteinrichtung 42 von der ersten Station A zu der zweiten Station B, dann zu der dritten Station C und zu der vierten Station D transportierbar sind. Beispielsweise befindet sich in den Fig. 8 bis 12 das erste Halteelement 38 an der ersten Station A, das zweite Halteelement 39 an der zweiten Station B, das dritte Halteelement 40 an der dritten Station C und das vierte Halteelement 41 an der vierten Station D. Im nächsten Takt werden die Halteelemente 38 durch die Transporteinrichtung 42 zur jeweils nächsten Station transportiert, so dass sich das erste Halteelement 38 an der zweiten Station B befindet, das zweite Halteelement 39 an der dritten Station C, das dritte Halteelement 40 an der vierten Station D und das vierte Halteelement 41 an der ersten Station A.

Die Transporteinrichtung 42 ist bei der in den Fig. 8 bis 12 dargestellten Ausführungsform der Vorrichtung 20 als Werkzeugrevolver 46 ausgebildet. Der Werkzeugrevolver 46 ist um eine Drehachse 48 durch einen Drehantrieb 50 drehbar, um die Halteelemente 38-41 zu der jeweils nächsten Station A-D zu bringen. Hierzu sind die Halteelemente 38-41 an nicht näher dargestellten Auslegern einer Drehwelle 52 des Werkzeugrevolvers 46 gelagert.

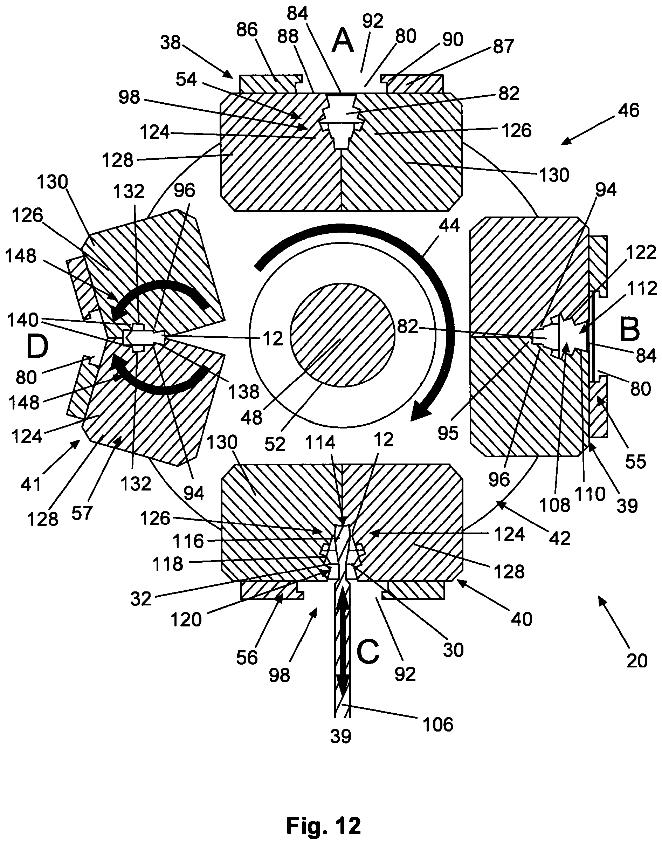

Wie am besten aus Fig. 12 ersichtlich, sind die Halteelemente 38-41 als jeweils gleichartig zueinander ausgebildete Form 54-57 ausgebildet oder weisen eine derartige Form 54-57 auf. Auf Gestalt und Ausbildung der Form 54-57 wird hiernach noch näher eingegangen.

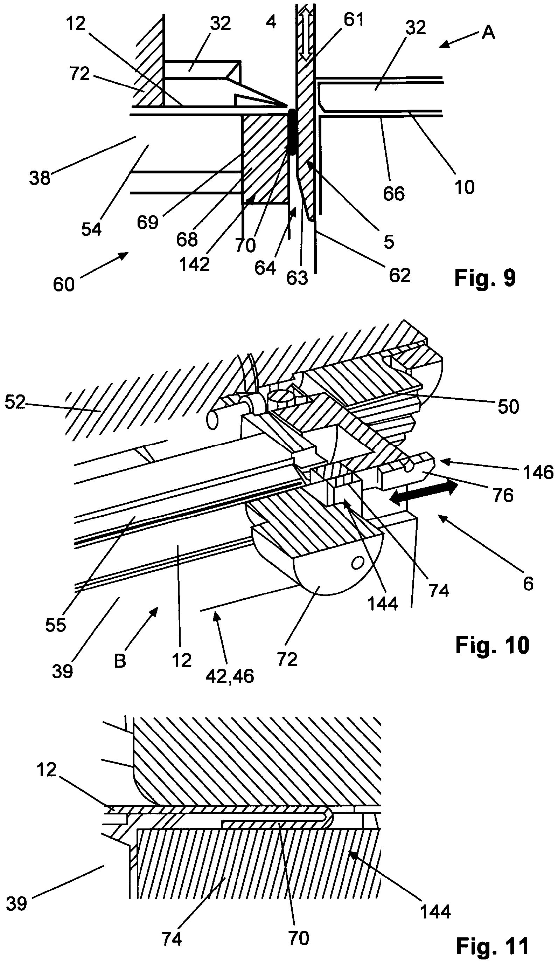

Fig. 9 zeigt einen Querschnitt durch einen Einlaufbereich an dem ersten Halteelement 38 an der ersten Station A.

Wie aus Fig. 8 und Fig. 9 ersichtlich, wird der mit den Schenkeln 30, 32 versehene Streifen 10 in das sich an der ersten Station A befindliche Halteelement - hier das erste Halteelement 38 - eingeführt.

Demnach bilden die Vorratsrolle 22, die Umlenk- und Glättrolle 28, die Sickrollen 24 und die Schenkelumbiegeeinrichtung 36 Elemente der Bereitstelleinrichtung 58 zum Bereitstellen des in den Fig. 1 und 2 dargestellten Streifens 10 aus Isoliermaterial an der ersten Station A.

Die erste Station A ist mit der Schneideinrichtung 60 zum Abschneiden des Isolierungsstreifenstücks 12 von dem Streifen 10 und mit einer Kragenprägeeinrichtung 142 zum Prägen des Kragens 70 versehen, die im Folgenden näher erläutert werden.

Wie aus Fig. 8 und Fig. 9 ersichtlich, weist die Schneideinrichtung 60 eine angetrieben verschiebbare Schneidklinge 61 auf, mittels der das in das erste Halteelement 38 eingeschobene Isolierungsstreifenstücke 12 von dem verbleibenden Streifen 10 abgeschnitten wird. Die Schneidklinge 61 hat eine Schneidkante 62, an die sich eine Schräge 63 anschließt. Die Schneidkante 62 ist an der von dem Halteelement 38 entfernten Seite der Schneidklinge 61 ausgebildet; und die Schräge 63 erstreckt sich von der Schneidkante 62 aus gesehen in der Verschieberichtung der Schneidklinge 61 hin zu dem Halteelement 38. Die Schneidklinge 61 wird in einen Spalt 64 zwischen einer Einlaufführung 66 und einem Schneidblock 68 eingeführt. Durch die weiter von dem Schneidblock 48 entfernte Schneidkante 62 wird das Isolierstreifenstück 12 unmittelbar an der Einlaufführung 66 abgeschnitten, wobei der sich über den Spalt 64 erstreckende Endbereich des abgeschnittenen Isolierstreifenstücks 12 durch die Schräge 62 um eine Kante des Schneidblockes 68 herumgeführt wird und so einen Kragen 70 bildet, der an der Kante des Schneidblockes 68 geprägt wird.

Der Schneidblock 68 ist besonders bevorzugt als Teil eines ersten Schiebers 69 ausgebildet, welcher, z.B. nach dem Einführen des Isolierungsstreifenstücks 12 in das erste Halteelement 38, in seine Schneidposition eingefahren wird, um daraufhin mit eingefahrenem ersten Schieber 69 den Schneidvorgang (vierter Schritt 4) und den Vorgang des Prägens des Kragens 70 (fünfter Schritt 5) durchzuführen. Nach dem Durchführen des vierten Schritts 4 und des fünften Schritts 5 fährt der erste Schieber 69 wieder heraus, woraufhin ein Transport der Halteelemente 38-41 zu der jeweils nächsten Station A-D erfolgen kann.

Weiter ist in Fig. 9 und Fig. 8 ein Festhaltestempel 72 angedeutet, der an der ersten Station A radial auf das Halteelement 38 zu bewegbar ist, um das Isolierungsstreifenstück 12 zum Abschneiden festzuhalten, und wieder zurückziehbar ist, um die Bewegung des ersten Halteelements 38 mit dem Isolierungsstreifenstück 12 zur nächsten Station B und an dem nachgeführten vierten Halteelement 41 die Einführung des Streifens 10 im nächsten Takt zu ermöglichen.

So werden an der ersten Station A der vierte Schritt 4 und der fünfte Schritt 5 durchgeführt, und es entsteht die in Fig. 3 dargestellte Form des Isolierungsstreifenstücks 12.

Gleichzeitig zu der Bearbeitung des ersten Isolierungsstreifenstücks 12 an der ersten Station A erfolgt an der zweiten Station B eine Weiterverarbeitung eines zweiten Isolierungsstreifenstücks 12, welches in einem vorherigen Arbeitstakt an der ersten Station A entsprechend abgeschnitten worden ist, wobei der Kragen 70 entsprechend geprägt worden ist.

An der zweiten Station B erfolgt, wie dies nun näher anhand der Fig. 10, der Fig. 11 sowie der Fig. 4 erläutert wird, ein Umbiegen des Kragens 70 (sechster Schritt 6) und ein Positionieren des Isolierungsstreifenstücks mit umgelegten Kragen 70 in dem als zweite Form 55 ausgebildeten zweiten Halteelements 39. Hierzu sind an der zweiten Station B eine Kragenumschlageinrichtung 144 und eine Positioniereinrichtung 146 ausgebildet, die im Folgenden näher erläutert werden.

An der zweiten Station B ist ebenfalls ein Festhaltestempel 72 ausgebildet, der vergleichbar wie der Festhaltestempel 72 an der ersten Station A wirkt und das noch mit seinem Endbereich über das zweite Halteelement 39 hinausragende zweite Isolierungsstreifenstück 12 in dem zweiten Halteelement 39 fixiert. Die Kragenumschlageinrichtung 144 weist einen zweiter Schieber 74 an der zweiten Station B auf, der in axialer Richtung auf das zweite Halteelement 39 zu bewegbar ist, um den Kragen 70 in der in Fig. 11 dargestellten Weise umzubiegen. Anschließend wird der Festhaltestempel 72 an der zweiten Station B zurückgezogen und das zweite Isolierungsstreifenstück 12 durch einen dritten Schieber 76 - Beispiel für die Positioniereinrichtung 146 - vollständig in das zweite Halteelement 39 hineingeschoben. Die sich nach der Bearbeitung an der zweiten Station B ergebende Formgebung des Isolierstreifenstücks 12 ist in Fig. 4 dargestellt.

Gleichzeitig zu dem Schneiden des ersten Isolierungsstreifenstücks 12 an der ersten Station A und dem Umlegen des Kragens 70 an dem zweiten Isolierungsstreifenstück 12 an der zweiten Station B erfolgt an der dritten Station C das Formen eines in dem an der dritten Station C befindlichen dritten Halteelement 40 gehaltenen dritten Isolierungsstreifenstücks 12 durch die Formeinrichtung 98. Dieses dritte Isolierungsstreifenstück 12 ist in einem vorherigen Takt an der zweiten Station B bearbeitet worden. Die Ausbildung der Formeinrichtung 98 wird im Folgenden anhand der Darstellung in Fig. 12 näher erläutert.

Fig. 12 zeigt die gleichzeitige Anordnung der Halteelemente 38-41 an den unterschiedlichen Stationen A-D. Außerdem zeigt Fig. 12 den Querschnitt durch die jeweils als Form 54-57 wirkenden Halteelemente 38-41.

Wie aus Fig. 12 ersichtlich, sind die Halteelemente 38-41 im Wesentlichen gleich aufgebaut. Sie weisen jeweils eine erste Aufnahme 80 zum Aufnehmen des Isolierungsstreifenstücks 12 und eine zweite Aufnahme 82 zum Aufnehmen und Formen des Isolierungsstreifenstücks 12 auf. Die erste Aufnahme 80 ist breiter als die zweite Aufnahme 82 ausgebildet. Die zweite Aufnahme 82 befindet sich radial einwärts zu der ersten Aufnahme 80 und mündet mit ihrer spaltförmigen Öffnung 84 am Grund der ersten Aufnahme 80.

In einer bevorzugten Ausgestaltung weist die erste Aufnahme 80 ein erstes Seitenbegrenzungselement 86 und ein zweites Seitenbegrenzungselement 87 und am Grund eine Bodenfläche 88 auf, gegen die die Festhaltestempel 72 das Isolierungsstreifenstück 12 klemmen können. Die Bodenfläche 88 weist mittig die spaltförmige Öffnung 84 auf.

Die erste Aufnahme 80 ist vorzugsweise im Querschnitt im Wesentlichen rechteckförmig ausgestaltet, wobei in den Seitenbegrenzungselementen 86, 87 an den Seitenflächen eine Nut bzw. ein Hinterschnitt 90 gebildet ist. Gegenüber von der Bodenfläche 88 ist zwischen den Seitenbegrenzungselementen 86, 87 eine Öffnung 92 vorgesehen, durch die der jeweilige Festhaltestempel 72 hindurchgreifen kann. Bei der dargestellten Ausführungsform ist diese Öffnung 92 als Längsöffnung ausgebildet, die sich über die gesamte Länge des Halteelements 38-41 erstreckt.

Die zweite Aufnahme 82 ist zum Formen des Isolierungsstreifenstücks 12 ausgebildet. Sie weist mehrere Formflächen 94, 95, 96 auf, die Negativformen für Außenflächen des Isolierungsstreifenstücks 12 bilden. Die Form und Anordnung der Formflächen 94, 95, 96 werden entsprechend der Form und Anordnung der Seitenwände der zu isolierenden Windungsnuten 14 ausgewählt.

Die dritte Station C ist als Formstation zum Formen des Isolierstreifenstücks 12 ausgebildet. An dieser Formstation C wird das sich hier an dem dritten Halteelement 40 befindliche Isolierstreifenstück 12 durch die Formeinrichtung 98 geformt. Die Formeinrichtung 98 weist die Formen 54-57 sowie einen als Formelement wirkenden Prägestempel 106 auf. Der Prägestempel 106 ist an der dritten Station C verschiebbar angebracht, so dass er sich radial in die zweite Aufnahme 82 hineinbewegen kann und wieder herausgefahren werden kann.

Als Formflächen 94-96 sind hierzu eine erste Formfläche 94 zum Bilden einer ersten Seitenwandung 100, eine zweite Formfläche 95 zum Bilden eines Rückens 102 und eine dritte Formfläche 96 zum Bilden einer zweiten Seitenwandung 104 vorgesehen.

Der Prägestempel 106 ist dazu ausgebildet, beim Hineinschieben in die zweite Aufnahme 82 das dritte Isolierstreifenstück 12 aus der ersten Aufnahme 80 durch die spaltförmige Öffnung 84 hindurch in die zweite Aufnahme 82 zu drücken.

Der Prägestempel 106 ist vorzugsweise weiter dazu ausgebildet, das dritte Isolierungsstreifenstück 12 nach dem Hindurchdrücken durch die Öffnung 84 gegen die zweite Formfläche 95 zu drücken, wobei an den Kanten des freien Endes des Prägestempels und an den Übergängen zwischen der ersten Formfläche 94 und der zweiten Formfläche 95 sowie zwischen der zweiten Formfläche 95 und der dritten Formfläche 96 eine Prägung des Übergangs zwischen dem Rücken 102 und den Seitenwandungen 100, 104 erfolgt.

Zwischen einem durch die Formflächen 94, 95, 96 begrenzten Formbereich 108 und der spaltförmigen Öffnung 84 weist die zweite Aufnahme 82 in Richtung auf die Drehachse 48 konisch zulaufende Übergangsflächen 110 auf. Hierdurch ist der Übergang zwischen der ersten Aufnahme 80 und dem Formbereich 108 trichterförmig ausgebildet, so dass das Einfügen des Isolierstreifenstücks 12 durch die spaltförmige Öffnung 84 erleichtert ist.

Vorzugsweise erweitert sich der Formbereich 108 nach den Übergangsflächen 110 wieder, so dass der Formbereich 108 eine größere Breite als der durch die Übergangsflächen 110 begrenzte konische Übergangsbereich 112 hat.

Die die Seitenwandungen 100, 104 bildenden Formflächen 94, 96 sind an der dritten Station C ebenfalls derart schräg ausgebildet, so dass sich der Formbereich 108 von radial außen nach radial innen gesehen konisch verengt.

Der Prägestempel 106 weist an dem freien Ende 114 einen dickeren Bereich 116 und dann weiter radial außen einen dünneren Bereich 118 auf, der bei vollständigem Einführen des Prägestempels 106 in die zweite Aufnahme auf radialer Höhe des Übergangsbereichs 112 zu liegen kommt. Durch die konisch zulaufende Ausbildung des Formbereiches 108 mit schrägen Formflächen 94, 96 und die Aufeinanderfolge des dickeren Bereichs 116 und des dünneren Bereichs 118 an dem Prägestempel 106 kann das Isolierstreifenstück 12 durch die spaltförmige Öffnung 84 gedrückt werden, wobei die aufgestellten Schenkel 30, 32 in die durch die Ausbildung des dünneren Bereiches 118 geschaffene Vertiefung 120 ragen können und so durch den Übergangsbereich 112 überführt werden können und dann an sich quer zu der benachbarten Formfläche 94, 96 erstreckenden Schenkelstützflächen 122 zu liegen kommen.

Wie weiter der Fig. 12 entnehmbar ist, weisen die erste bis vierte Form 54-57 jeweils ein erstes Formteil 124 und ein zweites Formteil 126 auf, die relativ zueinander für einen weiteren Schritt des Formens des Isolierstreifenstücks 12 bewegbar sind.

Die Relativbewegung kann auf unterschiedliche Weise erfolgen. In den dargestellten Ausführungsbeispielen sind die Formteile 124, 126 relativ zueinander verschwenkbar.

An der ersten bis dritten Station A bis C befinden sich die Formteile 124, 126 in einer ersten Position, in welcher die Aufnahmen 80, 82 die zuvor geschilderte Ausrichtung und Ausbildung haben.

Hierzu ist das erste Formteil 124 an einem ersten Halteteilelement 128 ausgebildet, und das zweite Formteil 126 ist an einem zweiten Halteteilelement 130 ausgebildet. Weiter ist eine Halteteilelement-Antriebseinrichtung 148 zum Antreiben einer Relativbewegung des ersten und des zweiten Halteteilelements 128, 130 vorgesehen. Deren Wirkung und Funktion wird im Folgenden näher dargestellt.

Die Form, die das dritte Isolierstreifenstück 12 an der dritten Station C erhält, ist näher in Fig. 5 dargestellt. Hier sind der entsprechend geprägte Rücken 102 sowie die erste Seitenwandung 100 und die zweite Seitenwandung 104 zu sehen. Dabei sind die Seitenwände 100, 104 noch schräg zueinander ausgebildet, so dass sich im Querschnitt eine Trapezform ausbildet, wobei der Rücken 102 eine schmälere Seite des Trapezes bildet. An der breiteren Seite ist das Isolierstreifenstück 12 noch offen, so dass der Prägestempel 106 wieder herausgefahren werden kann. Diese Öffnung wird links und rechts durch die umgebogenen, hier mit einem Winkel größer als 90 Grad zu der jeweiligen Seitenwandung 100, 104 verlaufenden Schenkel 30, 32 begrenzt.

An der oder im Verlauf der Bewegung zu der vierten Station D erfolgt dann der achte Schritt 8, wonach das an der vierten Station D in dem vierten Halteelement 41 gehaltene vierte Isolierstreifenstück 12 aus der in Fig. 5 dargestellten Form in die in Fig. 6 dargestellte Form gefaltet wird. Wie aus Fig. 12 ersichtlich, werden hierzu das erste Halteteilelement 128 und das zweite Halteteilelement 130 durch die Halteteilelement-Antriebseinrichtung 148 relativ zueinander bewegt, so dass auch das erste Formteilelement 124, welches die erste Formfläche 94 aufweist, und das zweite Formteilelement 126, welches die dritte Formfläche 96 aufweist, relativ zueinander bewegt werden.

Bei der dargestellten Ausführungsform werden hierzu die Halteteilelemente 128, 130 relativ zueinander verschwenkt. Bei anderen Ausgestaltungen sind auch andere Bewegungen möglich.

Das Antreiben dieser Eigenbewegung des Halteelements 41 kann auf unterschiedliche Art und Weise erfolgen.

Bei einer nicht näher dargestellten Ausgestaltung weist die Halteteilelement-Antriebseinrichtung 148 einen gesonderten Antrieb oder einen gesonderten Aktor auf (nicht dargestellt). Dieser kann z.B. an der vierten Station D ausgebildet sein und durch ein angetrieben bewegbares Element das Halteelement 41 zum Bewegen desselben erfassen. Beispielsweise sind zwei Schieber vorgesehen, welche durch Einschieben die Halteteilelemente 128, 130 relativ zueinander verschwenken. Bei einer anderen Ausgestaltung weist die Halteteilelement-Antriebseinrichtung 148 am Übergang zu der vierten Station D eine Kulissenführung (nicht dargestellt) auf, in die entsprechende Gegenelemente an den Halteteilelementen 128, 130 eingreifen, so dass durch die Bewegung der Transporteinrichtung 42 relativ zu der Kulissenführung die Bewegung der Halteteilelemente 128, 130 initiiert wird.

So werden an der vierten Station D oder im Verlauf der Bewegung zu der vierten Station die Formflächen 94, 96 zueinander ausgerichtet. Die Übergangsflächen 110 können hierzu als Anschlag dienen.

Weiter weist die vierte Station D die Einschiebeeinrichtung 140 auf. Diese weist einen hier nicht näher dargestellten vierten Schieber auf, der, beispielsweise geführt durch Führungsnuten 132, in der ersten Formfläche 94 und der dritten Formfläche 96 axial in die zweite Aufnahme 82 geschoben wird und axial insgesamt durch das vierte Halteelement 41 geschoben wird, um das fertig geformte Isolierstreifenstück 12 aus dem vierten Halteelement 41 heraus und durch eine in Fig. 8 angedeutete Ausstoßöffnung 134 in einer Lagerplatte 136 der Transporteinrichtung 42 hindurch in die hiermit ausgerichtete Windungsnut 14 des Stators 18 zu schieben, wie dies in Fig. 7 angedeutet ist. Anschließend an das Einschieben wird der Stator 18 mit einer nicht näher dargestellten Statorhalte- und Bewegungseinrichtung um eine Nut weitergedreht, bis die nächste Windungsnut 14 mit der Ausstoßöffnung 134 fluchtet.

Bei der in den Fig. 8 bis 12 dargestellten Ausführungsformen der Vorrichtung 20 wurde somit die Durchführung der oben genannten Schritte 4 bis 9 auf Stationen A-D verteilt, die um eine horizontale Achse - Drehachse 48 - herum in einem Werkzeugrevolver 46 rotarisch angeordnet sind.

Die Schritte 4 bis 9 wurden dazu auf einen ersten bis vierten Takt aufgeteilt. Hierdurch verringert sich auch der Bauraumbedarf. In dem ersten Takt - an der ersten Station A - wird das beispielsweise als Papier ausgebildete Isolationsmaterial mit bereits hochgeklappten Schenkeln 30, 32 - nach dem dritten Schritt 3 - in den Werkzeugrevolver 46 geschoben. Die Länge der späteren Nutisolierung 138 - siehe Fig. 7 - hängt davon ab, wie weit der Streifen 10 Isolationsmaterial eingeschoben wird.

Weiter wird im ersten Takt, an der ersten Station A, der Streifen 10 Isolationsmaterial geklemmt, und der erste Schieber 69 wird eingefahren. Anschließend wird die Isolation abgeschnitten und gleichzeitig der Kragen 70 geprägt. Der erste Schieber 69 fährt wieder heraus.

Im Anschluss dreht sich der Werkzeugrevolver 46 um 90 Grad zum zweiten Takt - an der zweiten Station B. Hier wird durch den zweiten Schieber 74 der Kragen 70 umgelegt und durch einen dritten Schieber 76 das Isolierungsstreifenstück 12 vollständig in den Werkzeugrevolver 46 geschoben. Anstelle der Ausbildung mit einem zweiten Schieber 74 und einem dritten Schieber 76 können die Funktionen derselben auch in einem kombinierten gemeinsamen Schieber durchgeführt werden.

Nach einer weiteren Drehung um 90 Grad zum dritten Takt - dritte Station C - fährt der Prägestempel 106 ein. Hierbei wird das Isolierungsstreifenstück 12 in eine Prägeform - z.B. die dritte Form 56 - gedrückt und bekommt den Rücken 102 geprägt. Der Prägestempel 106 fährt vor der nächsten Drehung um 90 Grad wieder heraus. Bei dieser letzten Drehung werden zwei Formhälften - erstes Halteteilelement 128 und zweites Halteteilelement 130 - über eine Kulisse zusammengeklappt, und das Isolierungsstreifenstück 12 wird zusammengefaltet - achter Schritt 8. Dadurch erhält das Isolierungsstreifenstück 12 die endgültige Form. In dem vierten Takt - an der vierten Station D - drückt ein Ausschieber (vierter Schieber, nicht dargestellt) die fertige Nutisolierung 138 aus dem Werkzeugrevolver 46 in den Stator 18. Nach dem Zurückfahren des Ausschiebers kann der Werkzeugrevolver 46 wieder auf den ersten Takt - in die erste Station A - drehen. Der Vorgang wiederholt sich. Bei jeder Taktung wird an der ersten Station A ein neuer Streifen 10 Isoliermaterial eingeschoben, so dass immer vier Isolierungsstreifenstücke 12 gleichzeitig in dem Werkzeugrevolver 46 liegen. Der Stator 18 selbst wird nach jedem Einschieben einer Nutisolierung 138 um eine Nut weitergedreht.

Das Isolierungsstreifenstück 12 verbleibt während der gesamten Prozessdauer im selben Formstück - Form 54-57. Hierdurch wird ein direkter Transport des Isolierungsstreifenstücks 12 selbst vermieden.

Bei der Ausgestaltung der Fig. 8 bis 12 sind die mehreren Halteelemente 38-41 an einem Werkzeugrevolver 46 ausgebildet, so dass eine Transporteinrichtung 42 durch den Werkzeugrevolver 46 und dessen Drehantrieb 50 gebildet sind.

Hierdurch wird eine kreisförmige Umlaufbahn 44 gebildet, an deren Umfang mehrere Stationen A-D ausgebildet werden können, so dass mehrere Bearbeitungsschritte parallel und gleichzeitig durchgeführt werden können.

Die hier dargestellte Idee ist jedoch nicht auf die Ausführung als Werkzeugrevolver 46 beschränkt. Die entsprechenden mehreren Halteelemente 38-41 können auch auf anders ausgebildeten Umlaufbahnen 44 von Station zu Station bewegt werden, wie dies in Fig. 13 dargestellt ist. Eine denkbare Anordnung wäre als Kette oder Paternoster mit Rückführung der Halteelemente 38-41 mit entsprechenden Formen 54-57. So kann auch eine andere Anordnung der Stationen A-D erfolgen. Dabei werden jedoch stets wenigstens zwei Schritte des Verfahrens und dabei insbesondere der Schritt des Formens des Isolierstreifenstücks 12 und der Schritt des Einschiebens des geformten Isolierstreifenstücks 12 parallel an unterschiedlichen Stationen durchgeführt.

### Bezugszeichenliste:

- 1: erster Schritt
- 2: zweiter Schritt
- 3: dritter Schritt
- 4: vierter Schritt
- 5: fünfter Schritt
- 6: sechster Schritt
- 7: siebter Schritt
- 8: achter Schritt
- 9: neunter Schritt
- 10: Streifen (aus Isoliermaterial)
- 12: Isolierungsstreifenstück
- 14: Windungsnut
- 16: Bauteil
- 18: Stator
- 20: Vorrichtung
- 22: Vorratsrolle
- 24: Sickrolle
- 28: Umlenk- und Glättrolle
- 30: erster Schenkel
- 32: zweiter Schenkel
- 34: Sicke
- 36: Schenkelumbiegeinrichtung
- 38: erstes Halteelement
- 39: zweites Halteelement
- 40: drittes Halteelement
- 41: viertes Halteelement
- 42: Transporteinrichtung
- 44: Umlaufbahn
- 46: Werkzeugrevolver
- 48: Drehachse
- 50: Drehantrieb
- 52: Drehwelle
- 54: erste Form
- 55: zweite Form
- 56: dritte Form
- 57: vierte Form
- 58: Bereitstelleinrichtung
- 60: Schneideinrichtung
- 61: Schneidklinge
- 62: Schneidkante
- 63: Schräge
- 64: Spalt
- 66: Einlaufführung
- 68: Schneidblock
- 69: erster Schieber
- 70: Kragen
- 72: Festhaltestempel
- 74: zweiter Schieber
- 76: dritter Schieber
- 80: erste Aufnahme
- 82: zweite Aufnahme
- 84: spaltförmige Öffnung
- 86: erstes Seitenbegrenzungselement
- 87: zweites Seitenbegrenzungselement
- 88: Bodenfläche
- 90: Hinterschnitt
- 92: Längsöffnung
- 94: erste Formfläche
- 95: zweite Formfläche
- 96: dritte Formfläche
- 98: Formeinrichtung
- 100: erste Seitenwandung
- 102: Rücken
- 104: zweite Seitenwandung
- 106: Prägestempel
- 108: Formbereich
- 110: Übergangsfläche
- 112: Übergangsbereich
- 114: freies Ende
- 116: dickerer Bereich
- 118: dünnerer Bereich
- 120: Vertiefung
- 122: Schenkelstützfläche
- 124: erstes Formteil
- 126: zweites Formteil
- 128: erstes Halteteilelement
- 130: zweites Halteteilelement
- 132: Führungsnut
- 134: Ausstoßöffnung
- 136: Lagerplatte
- 138: Nutisolierung
- 140: Einschiebeeinrichtung
- 142: Kragenprägeeinrichtung
- 144: Kragenumschlageinrichtung
- 146: Positioniereinrichtung
- 148: Halteelement-Antriebseinrichtung
- A: erste Station
- B: zweite Station
- BS: Breite des Streifens
- C: dritte Station
- D: vierte Station

## Patentansprüche

1. Verfahren zum Herstellen von Nutisolierungen (138) für Windungsnuten (14) eines Bauteils (16) einer elektrischen Maschine, umfassend
a) Bereitstellen eines Streifens (10) Isoliermaterials,
c) Abschneiden eines Isolierungsstreifenstücks (12) von dem Streifen (10),
d) Formen des Isolierungsstreifenstücks (10) zur Anpassung an die Form der Windungsnut (14) und
e) Einschieben des geformten Isolierungsstreifenstücks (12) in die Windungsnut (14),
**dadurch gekennzeichnet,**
**dass** zumindest die Schritte d) und e) für wenigstens zwei in unterschiedliche Windungsnuten (14) einzuschiebende Isolierungsstreifenstücke (12) derart parallel durchgeführt werden, dass Schritt d) für ein Isolierungsstreifenstück (12) an einer Station (C) durchgeführt wird, während gleichzeitig an einer anderen Station (D) Schritt e) für ein zuvor geformtes weiteres Isolierungsstreifenstück (12) durchgeführt wird.

2. Verfahren nach Anspruch 1,
**dadurch gekennzeichnet,**
**dass** die Schritte c), d) und e) für wenigstens drei jeweils in unterschiedliche Windungsnuten (14) einzuschiebende Isolierungsstreifenstücke (12) parallel durchgeführt werden.

3. Verfahren nach einem der voranstehenden Ansprüche,
**gekennzeichnet durch** die Schritte
Formen des Isolierungsstreifenstücks (12) in einer von mehreren Formen (54-57) und
Führen der mehreren Formen (54-57) auf einer Umlaufbahn (44), die wenigstens eine Aufnahmestation (A) zum Aufnehmen des Isolierungsstreifenstücks (12) und eine Abgabestation (D) zum Einschieben des geformten Isolierungsstreifenstücks (12) in die Windungsnut (14) enthält.

4. Verfahren nach Anspruch 3,
**gekennzeichnet durch** Verwenden zumindest einer ersten, einer zweiten und einer dritten Form (54-56), die getaktet auf der Umlaufbahn (44) zumindest von der Aufnahmestation (A) zu einer Formstation (C), von der Formstation (C) zu der Abgabestation (D) und von der Abgabestation (D) zu der Aufnahmestation (A) verfahren werden.

5. Verfahren nach Anspruch 4,
**gekennzeichnet durch** Verwenden einer vierten Form (57), wobei die erste bis vierte Form (54-57) getaktet zwischen den Stationen (A-D) auf der Umlaufbahn (44) verfahren werden, wobei die Stationen (A-D) noch zwischen der Aufnahmestation (A) und der Formstation (C) eine Positionierstation (B) umfassen.

6. Verfahren nach einem der Ansprüche 3 bis 5,
**dadurch gekennzeichnet**,
6.1 dass das Abschneiden an der Aufnahmestation (A) erfolgt und/oder
6.2 dass Formen (54-57) mit einem ersten (124) und einem zweiten Formteil (126) verwendet werden und dass das erste und das zweite Formteil (124, 126) im Zuge der Bewegung zu zumindest einer oder an zumindest einer der Stationen (D) auf der Umlaufbahn (44) relativ zueinander zur Formveränderung des Isolierungsstreifenstücks (12) bewegt werden.

7. Verfahren nach einem der voranstehenden Ansprüche,
**dadurch gekennzeichnet, dass** die Herstellung in Bearbeitungstakten erfolgt, wobei zwei, drei, vier oder mehr Bearbeitungstakte parallel durchgeführt werden, wobei die Bearbeitungstakte ausgewählt werden aus einer Gruppe von Bearbeitungstakten, die enthält:
- Formen wenigstens einer Längskante oder mehrerer Längskanten des Streifens (10) oder des Isolierungsstreifenstücks (12);
- Abschneiden des Isolierungsstreifenstücks (12) und/oder Umschlagen eines Kragens (70) an einer Vorderkante des Streifens (10) und/oder an einer Hinterkante des Isolierungsstreifenstücks (12);
- Positionieren des Isolierungsstreifenstücks (12) in der Form (55);
- Prägen des Isolierungsstreifenstücks (12) mittels eines Prägestempels (106) in der Form (56), um die Nutisolierung (138) zu formen, und
- Verschieben des geformten Isolierungsstreifenstücks (12) aus der Form (57) in die Windungsnut (14).

8. Verfahren nach einem der voranstehenden Ansprüche,
**dadurch gekennzeichnet**,
8.1 dass das Verfahren den Schritt enthält:
b) Formen wenigstens eines Längskantenbereichs des Streifens (10) oder des Isolierungsstreifenstücks (12) und/oder
8.2 dass Schritt c) enthält: Auswählen der sich in Bewegungsrichtung des Streifens (10) erstreckenden Isolierungsstreifenstücklänge des abzuschneidenden Isolierungsstreifenstücks (12) abhängig von der axialen Länge der Windungsnut (14); und dass Schritt e) enthält: Einschieben des geformten Isolierungsstreifenstücks (12) in einer sich in Richtung der Isolierungsstreifenstücklänge erstreckenden Einschieberichtung.

9. Vorrichtung (20) zum Herstellen von Nutisolierungen (138) für Windungsnuten (14) eines Bauteils (16) einer elektrischen Maschine, umfassend:
eine Bereitstelleinrichtung (58) zum Bereitstellen eines Streifens (10) Isoliermaterials,
eine Schneideinrichtung (60) zum Abschneiden eines Isolierungsstreifenstücks (12) von dem Streifen (10),
eine Formeinrichtung (98) zum Formen des Isolierungsstreifenstücks (12);
eine Einschiebeeinrichtung (140) zum Einschieben des geformten Isolierungsstreifenstücks (12) in die Windungsnut (14), und
eine Transporteinrichtung (42) mit mehreren Halteelementen (38-41) zum Halten je wenigstens eines Isolierungsstreifenstückes (12), **dadurch gekennzeichnet,**
**dass** die Halteelemente (38-41) auf einer Umlaufbahn (44) mit mehreren Stationen (A-D) zur gleichzeitigen Bearbeitung mehrerer Isolierungsstreifenstücke (12) bewegbar sind, wobei die Vorrichtung (20) dazu ausgebildet ist, ein erstes Isolierstreifenstück (12) an einer (C) dieser Stationen (A-D) zu formen und gleichzeitig in einer anderen (D) dieser Stationen (A-D) ein zuvor geformtes weiteres Isolierstreifenstück (12) in die Windungsnut (14) einzuführen.

10. Vorrichtung (20) nach Anspruch 9,
**gekennzeichnet durch** eines, mehrere oder alle der folgenden Merkmale,
10.1 dass die Transporteinrichtung (42) als Halteelemente (38-41) mehrere Formen (54-57) der Formeinrichtung (98) aufweist;
10.2 dass die Transporteinrichtung (42) einen Werkzeugrevolver (46) aufweist oder als solcher ausgebildet ist;
10.3 dass die Transporteinrichtung (42) dazu ausgebildet ist, die Halteelemente (38-41) von einer Aufnahmestation (A) zur Aufnahme eines **durch** die Schneideinrichtung (60) abgeschnittenen Isolierstreifenstücks (12) zu einer Formstation (C) zum Formen des Isolierstreifenstücks (12) **durch** die Formeinrichtung (98), von der Formstation (C) zu einer Abgabestation (D) zum Einschieben des geformten Isolierstreifenstücks (12) in die Windungsnut (14) und von der Abgabestation (D) zu der Aufnahmestation (A) zu bewegen;
10.4 dass die Transporteinrichtung (42) dazu ausgebildet ist, die Halteelemente (38-41) von einer Aufnahmestation (A) zur Aufnahme eines **durch** die Schneideinrichtung (60) abgeschnittenen Isolierstreifenstücks (12) zu einer Positionierstation (B) zum Positionieren des Isolierstreifenstücks (12) in einer Form (54-57) der Formeinrichtung (98), von der Positionierstation (B) mit der Form (54-57) zu einer Formstation (C) zum Formen des Isolierstreifenstücks (12) **durch** die Formeinrichtung (98), von der Formstation (C) zu einer Abgabestation (D) zum Einschieben des geformten Isolierstreifenstücks (12) in die Windungsnut (14) und von der Abgabestation (D) zu der Aufnahmestation (A) zu bewegen;
10.5 dass die Transporteinrichtung (42) dazu ausgebildet ist, ein erstes Halteelement (38) von einer ersten Station (A) zu einer zweiten Station (B) auf der Umlaufbahn (44) zu bewegen und gleichzeitig hierzu ein zweites Halteelement (39) von der zweiten Station (B) zu der ersten (A) oder zu einer weiteren Station zu bewegen;
10.6 dass die Transporteinrichtung (42) ein erstes, ein zweites und ein drittes Halteelement (38, 39, 40) zur gleichzeitigen Bearbeitung von wenigstens drei Isolierstreifenstücken (12) an einer ersten bis dritten Station (A, B, C) aufweist;
10.7 dass die Transporteinrichtung (42) ein erstes, ein zweites, ein drittes und ein viertes Halteelement (38-41) zur gleichzeitigen Bearbeitung von wenigstens vier Isolierstreifenstücken (12) an einer ersten bis vierten Station (A-D) aufweist;
10.8 dass die Schneideinrichtung (60) eine Kragenumschlageinrichtung (144) zum Umschlagen einer Vorderkante des Streifens (10) und/oder einer Hinterkante des abgeschnittenen Streifenstücks (12) aufweist;
10.9 dass die Formeinrichtung (98) an einer Formstation (C) ein Formelement oder einen Prägestempel (106) aufweist; und/oder
10.10 dass eine Kantenaufstelleinrichtung (36) zum Aufstellen wenigstens einer Längskante des Streifens (10) und/oder des Isolierstreifenstücks (12) vorgesehen ist.

11. Vorrichtung (20) nach einem der Ansprüche 9 oder 10,
**dadurch gekennzeichnet,**
**dass** die Schneideinrichtung (60) zum Abschneiden des Isolierstreifenstücks (12) mit einer von der Länge der zu isolierenden Windungsnut (14) abhängigen Isolierstreifenstücklänge ausgebildet ist und dass die Einschiebeeinrichtung (140) zum Einschieben des geformten Isolierstreifenstücks (12) in einer in Richtung der Isolierstreifenstücklänge gerichteten Einschieberichtung ausgebildet ist.

12. Vorrichtung (20) nach einem der Ansprüche 9 bis 11,
**dadurch gekennzeichnet**,
12.1 dass jedes Halteelement (38-41) ein erstes Halteteilelement (128) und ein zweites Halteteilelement (130) aufweist, wobei die Halteteilelemente (128, 130) relativ zueinander bewegbar sind und/oder
12.2 dass jedes Halteelement (38-41) an der Transporteinrichtung (42) beweglich gelagert ist; und
dass eine Halteelement-Antriebseinrichtung (148) zum Antreiben der Relativbewegung der Halteteilelemente (128, 130) bzw. der Bewegung des Halteelements (38-41) vorgesehen ist.

13. Vorrichtung (20) nach Anspruch 12,
**dadurch gekennzeichnet,**
**dass** die Halteelement-Antriebseinrichtung (148)
13.1 zum Antreiben der Relativbewegung bzw. Bewegung an einer oder mehreren und/oder vor einer oder mehreren der Stationen (A-D) ausgebildet ist und/oder
13.2 ausgewählt ist aus der Gruppe von Antriebseinrichtungen, die einen aktiven Einzelantrieb, einen separaten Einzelantrieb, einen Aktor, eine Kulissensteuerung, eine feststehende Kulisse und ein Kulissenfolgeelement und ein Koppelgetriebe zum Koppeln der Halteelement-Bewegung oder Halteteilelement-Relativbewegung mit der Bewegung der Transporteinrichtung (42) umfasst.

## Claims

1. A method for producing slot insulators (138) for winding slots (14) of a component (16) of an electrical machine, comprising
a) supplying a strip (10) of insulating material,
c) cutting off an insulator strip portion (12) from the strip (10),
d) molding the insulator strip portion (10) for adjustment to the shape of the winding slot (14), and
e) inserting the molded insulator strip portion (12) into the winding slot (14),
**characterized in that**
at least the steps d) and e) are carried out in parallel for at least two insulator strip portions (12) to be inserted into different winding slots (14) in such a way that step d) is carried out for an insulator strip portion (12) at a station (C), while step e) is simultaneously carried out for a previously molded further insulator strip portion (12) at another station (D).

2. The method according to claim 1,
**characterized in that**
the steps c), d) and e) are carried out in parallel for at least three insulator strip portions (12) to be respectively inserted into different winding slots (14).

3. The method according to any one of the preceding claims,
**characterized by** the steps
molding the insulator strip portion (12) in one of several molds (54-57), and
guiding the several molds (54-57) on a circulating path (44) containing at least one pick-up station (A) for picking up the insulator strip portion (12) and a delivery station (D) for inserting the molded insulator strip portion (12) into the winding slot (14).

4. The method according to claim 3,
**characterized by** using at least one first, one second and one third mold (54-56), which are moved in a cyclical manner on the circulating path (44) at least from the pick-up station (A) to a molding station (C), from the molding station (C) to the delivery station (D), and from the delivery station (D) to the pick-up station (A).

5. The method according to claim 4,
**characterized by** using a fourth mold (57), wherein the first through fourth molds (54-57) are moved in a cyclical manner between the stations (A-D) on the circulating path (44), wherein the stations (A-D) additionally comprise a positioning station (B) between the pick-up station (A) and the molding station (C).

6. The method according to any one of the claims 3 to 5,
characterized
6.1 in that the cutting-off process takes place at the pick-up station (A), and/or
6.2 in that molds (54-57) with a first (124) and a second mold part (126) are used, and that the first and the second mold part (124, 126), in order to change the shape of the insulator strip portion (12), are moved relative to each other while being moved to at least one or at at least one of the stations (D) on the circulating path (44).

7. The method according to any one of the preceding claims,
**characterized in that** the production takes place in processing cycles, wherein two, three, four or more processing cycles are carried out in parallel, wherein the processing cycles are selected from a group of processing cycles including:
- molding at least one longitudinal edge or several longitudinal edges of the strip (10) or of the insulator strip portion (12);
- cutting off the insulator strip portion (12) and/or turning back a collar (70) on a front edge of the strip (10) and/or on a rear edge of the insulator strip portion (12);
- positioning the insulator strip portion (12) in the mold (55);
- embossing the insulator strip portion (12) by means of an embossing stamp (106) in the mold (56) in order to mold the slot insulator (138), and
- pushing the molded insulator strip portion (12) from the mold (57) into the winding slot (14).

8. The method according to any one of the preceding claims,
characterized
8.1 in that the method includes the step:
b) molding at least one longitudinal edge region of the strip (10) or of the insulator strip portion (12), and/or
8.2 in that step c) includes: selecting the insulator strip portion length, which extends in the moving direction of the strip (10), of the insulator strip portion (12) to be cut off, depending on the axial length of the winding slot (14); and in that step e) includes:
inserting the molded insulator strip portion (12) in an inserting direction extending in the direction of the insulator strip portion length.

9. A device (20) for producing slot insulators (138) for winding slots (14) of a component (16) of an electrical machine, comprising:
a supply device (58) for supplying a strip (10) of insulating material,
a cutting device (60) for cutting off an insulator strip portion (12) from the strip (10),
a molding device (98) for molding the insulator strip portion (12);
an inserting device (140) for inserting the molded insulator strip portion (12) into the winding slot (14), and
a transport device (42) with several holding members (38-41) for holding at least one insulator strip portion (12) each, **characterized in that** the holding members (38-41) are movable on a circulating path (44) with several stations (A-D) for the simultaneous processing of several insulator strip portions (12), wherein the device (20) is configured to mold a first insulator strip portion (12) at one (C) of these stations (A-D) and simultaneously to insert a previously molded further insulating strip portion (12) into the winding slot (14) at another one (D) of these stations (A-D).

10. The device (20) according to claim 9,
**characterized by** one, several or all of the following features,
10.1 that the transport device (42) has, as holding members (38-41), several molds (54-57) of the molding device (98);
10.2 that the transport device (42) includes a tool turret (46) or is configured as such;
10.3 that the transport device (42) is configured for moving the holding members (38-41) from a pick-up station (A) for picking up an insulating strip portion (12) cut off by the cutting device (60) to a molding station (C) for molding the insulating strip portion (12) by means of the molding device (98), from the molding station (C) to a delivery station (D) for inserting the molded insulating strip portion (12) into the winding slot (14), and from the delivery station (D) to the pick-up station (A);
10.4 that the transport device (42) is configured for moving the holding members (38-41) from a pick-up station (A) for picking up an insulating strip portion (12) cut off by the cutting device (60) to a positioning station (B) for positioning the insulating strip portion (12) in a mold (54-57) of the molding device (98), from the positioning station (B) with the mold (54-57) to a molding station (C) for molding the insulating strip portion (12) by means of the molding device (98), from the molding station (C) to a delivery station (D) for inserting the molded insulating strip portion (12) into the winding slot (14), and from the delivery station (D) to the pick-up station (A);
10.5 that the transport device (42) is configured for moving a first holding member (38) from a first station (A) to a second station (B) on the circulating path (44) and, simultaneously therewith, to move a second holding member (39) from the second station (B) to the first (A) or to another station;
10.6 that the transport device (42) has a first, a second and a third holding member (38, 39, 40) for simultaneously processing at least three insulating strip portions (12) on a first through third station (A, B, C);
10.7 that the transport device (42) has a first, a second, a third and a fourth holding member (38-41) for simultaneously processing at least four insulating strip portions (12) on a first through fourth station (A-D);
10.8 that the cutting device (60) has a collar turning device (144) for turning back a front edge of the strip (10) and/or a rear edge of the cut-off strip portion (12);
10.9 that the molding device (98) has a molding member or an embossing stamp (106) at a molding station (C); and/or
10.10 that an edge raising device (36) for raising at least one longitudinal edge of the strip (10) and/or of the insulating strip portion (12) is provided.

11. The device (20) according to any one of the claims 9 or 10,
**characterized in that**
the cutting device (60) is configured for cutting off the insulating strip portion (12) with an insulating strip portion length dependent upon the length of the winding slot (14) to be insulated, and that the inserting device (140) is configured for inserting the molded insulating strip portion (12) in an inserting direction oriented in the direction of the insulating strip portion length.

12. The device (20) according to any one of the claims 9 to 11,
**characterized in**
12.1 that each holding member (38-41) has a first holding sub-member (128) and a second holding sub-member (130), wherein the holding sub-members (128, 130) can be moved relative to each other, and/or
12.2 that each holding member (38-41) is movably mounted on the transport device (42); and
that a holding member drive device (148) for driving the relative movement of the holding sub-members (128, 130) or the movement of the holding member (38-41) is provided.

13. The device (20) according to claim 12,
**characterized in that**
the holding member drive device (148)
13.1 is configured for driving the relative movement or movement at one or more and/or upstream of one or more of the stations (A-D), and/or
13.2 is selected from the group of drive devices including an active individual drive, a separate individual drive, an actuator, a link motion, a stationary link and a link follower member and a mechanical linkage for linking the holding member movement or holding sub-member relative movement with the movement of the transport device (42).

## Revendications

1. Procédé de fabrication d'isolations de gorges (138) pour des gorges d'enroulement (14) d'un composant (16) d'une machine électrique, comprenant
a) fournir une bande (10) de matériau isolant,
c) couper une partie de bande isolante (12) de la bande (10),
d) mouler la partie de bande isolante (10) pour l'adapter à la forme de la gorge d'enroulement (14), et
e) insérer la partie moulée de la bande isolante (12) dans la gorge d'enroulement (14),
**caractérisé en ce**
**qu'**au moins les étapes d) et e) sont effectuées en parallèle pour au moins deux parties de bande isolante (12) à insérer dans différentes gorges d'enroulement (14), de telle sorte que l'étape d) est effectuée pour une partie de bande isolante (12) à un poste (C), tandis que l'étape e) est effectuée simultanément pour une autre partie de bande isolante (12) préalablement moulée à un autre poste (D).

2. Procédé selon la revendication 1,
**caractérisé en ce que**
les étapes c), d) et e) sont effectuées en parallèle pour au moins trois parties de bande isolante (12) à insérer respectivement dans différentes gorges d'enroulement (14).

3. Procédé selon l'une quelconque des revendications précédentes,
**caractérisé par** les étapes suivantes
moulage de la partie de bande isolante (12) dans un ou plusieurs moules (54-57), et guider les différents moules (54-57) sur un chemin de circulation (44) contenant au moins un poste de ramassage (A) pour ramasser la partie de bande isolante (12) et un poste de livraison (D) pour insérer la partie de bande isolante moulée (12) dans la gorge d'enroulement (14).

4. Procédé selon la revendication 3,
**caractérisé par** l'utilisation d'au moins un premier, un deuxième et un troisième moule (54-56), qui sont déplacés de manière cyclique sur le chemin de circulation (44) au moins du poste de ramassage (A) à un poste de moulage (C), du poste de moulage (C) au poste de livraison (D), et du poste de livraison (D) au poste de ramassage (A).

5. Procédé selon la revendication 4,
**caractérisé par** l'utilisation d'un quatrième moule (57), dans lequel les premier à quatrième moules (54-57) sont déplacés de manière cyclique entre les postes (A-D) sur le chemin de circulation (44), dans lequel les postes (A-D) comprennent en outre un poste de positionnement (B) entre le poste de ramassage (A) et le poste de moulage (C).

6. Procédé selon l'une des revendications 3 à 5,
caractérisé
6.1 en ce que le processus de découpage a lieu au poste de ramassage (A), et/ou
6.2 en ce que l'on utilise des moules (54-57) avec une première (124) et une seconde partie de moule (126), et en ce que la première et la seconde partie de moule (124, 126), afin de modifier la forme de la partie de bande isolante (12), sont déplacées l'une par rapport à l'autre tout en étant déplacées vers au moins une ou à au moins l'un des postes (D) sur le chemin de circulation (44).

7. Procédé selon l'une quelconque des revendications précédentes,
**caractérisé en ce que** la production se déroule en cycles de traitement, dans lesquels deux, trois, quatre cycles de traitement ou plus sont exécutés en parallèle, les cycles de traitement étant choisis dans un groupe de cycles de traitement comprenant:
- mouler au moins un bord longitudinal ou de plusieurs bords longitudinaux de la bande (10) ou de la partie de bande isolante (12);
- couper la partie de bande isolante (12) et/ou rabattre une collerette (70) sur un bord avant de la bande (10) et/ou sur un bord arrière de la partie de bande isolante (12);
- positionner la partie de bande isolante (12) dans le moule (55);
- embosser la partie de bande isolante (12) au moyen d'un tampon d'embossage (106) dans le moule (56) afin de mouler l'isolateur de gorge (138), et
- pousser la partie moulée de la bande isolante (12) du moule (57) dans la gorge d'enroulement (14).

8. Procédé selon l'une quelconque des revendications précédentes,
caractérisé
8.1 en ce que le procédé comprend l'étape:
b) mouler au moins une zone de bord longitudinal de la bande (10) ou de la partie de bande isolante (12), et/ou
8.2 en ce que l'étape c) comprend: la sélection de la longueur de la partie de bande isolante, qui s'étend dans la direction de déplacement de la bande (10), de la partie de bande isolante (12) à couper, en fonction de la longueur axiale de la gorge d'enroulement (14); et en ce que l'étape e) comprend: l'insertion de la partie de bande isolante (12) moulée dans une direction d'insertion s'étendant dans la direction de la longueur de la partie de bande isolante.

9. Dispositif (20) de fabrication d'isolateurs de gorges (138) pour des gorges d'enroulement (14) d'un composant (16) d'une machine électrique, comprenant:
un dispositif d'alimentation (58) pour fournir une bande (10) de matériau isolant,
un dispositif de coupe (60) pour couper une partie de bande isolante (12) de la bande (10),
un dispositif de moulage (98) pour mouler la partie de bande isolante (12);
un dispositif d'insertion (140) pour insérer la partie moulée de la bande isolante (12) dans la gorge d'enroulement (14), et
un dispositif de transport (42) avec plusieurs éléments de maintien (38-41) pour maintenir respectivement au moins une partie de bande isolante (12), **caractérisé en ce que** les éléments de maintien (38-41) sont mobiles sur un chemin de circulation (44) avec plusieurs postes (A-D) pour le traitement simultané de plusieurs parties de bande isolante (12), dans lequel le dispositif (20) est configuré pour mouler une première partie de bande isolante (12) à l'un (C) de ces postes (A-D) et pour insérer simultanément une autre partie de bande isolante (12) préalablement moulée dans la gorge d'enroulement (14) à l'un (D) de ces postes (A-D).

10. Dispositif (20) selon la revendication 9,
**caractérisé par** une, plusieurs ou toutes les caractéristiques suivantes,
10.1 le dispositif de transport (42) comporte, en tant qu'éléments de maintien (38-41), plusieurs moules (54-57) du dispositif de moulage (98);
10.2 le dispositif de transport (42) comprend une tourelle d'outils (46) ou est configuré comme tel;
10. 3 le dispositif de transport (42) est configuré pour déplacer les éléments de maintien (38-41) d'un poste de ramassage (A) pour ramasser une partie de bande isolante (12) coupée par le dispositif de coupe (60) à un poste de moulage (C) pour mouler la partie de bande isolante (12) au moyen du dispositif de moulage (98), du poste de moulage (C) à un poste de livraison (D) pour insérer la partie de bande isolante moulée (12) dans la gorge d'enroulement (14), et du poste de livraison (D) au poste de ramassage (A);
10. 4 le dispositif de transport (42) est configuré pour déplacer les éléments de maintien (38-41) d'un poste de ramassage (A) pour ramasser une partie de bande isolante (12) coupée par le dispositif de coupe (60) à un poste de positionnement (B) pour positionner la partie de bande isolante (12) dans un moule (54-57) du dispositif de moulage (98), du poste de positionnement (B) avec le moule (54-57) à un poste de moulage (C) pour mouler la partie de bande isolante (12) au moyen du dispositif de moulage (98), du poste de moulage (C) à un poste de livraison (D) pour insérer la partie de bande isolante moulée (12) dans la gorge d'enroulement (14), et du poste de livraison (D) au poste de ramassage (A);
10.5 le dispositif de transport (42) est configuré pour déplacer un premier élément de maintien (38) d'un premier poste (A) à un second poste (B) sur le chemin de circulation (44) et, simultanément, pour déplacer un second élément de maintien (39) du second poste (B) au premier (A) ou à un autre poste;
10.6 le dispositif de transport (42) comporte un premier, un deuxième et un troisième élément de maintien (38, 39, 40) pour traiter simultanément au moins trois parties de bande isolante (12) sur un premier à un troisième poste (A, B, C);
10.7 le dispositif de transport (42) comporte un premier, un deuxième, un troisième et un quatrième élément de maintien (38-41) pour traiter simultanément au moins quatre parties de bande isolante (12) sur un premier à une quatrième poste (A-D);
10.8 le dispositif de coupe (60) comporte un dispositif de rabattement (144) pour rabattre un bord avant de la bande (10) et/ou un bord arrière de la partie de bande coupée (12);
10.9 le dispositif de moulage (98) comporte un élément de moulage ou un tampon d'embossage (106) à un poste de moulage (C); et/ou
10.10 un dispositif de relèvement des bords (36) pour relever au moins un bord longitudinal de la bande (10) et/ou de la partie de bande isolante (12) est prévu.

11. Dispositif (20) selon l'une quelconque des revendications 9 ou 10,
**caractérisé en ce que**
le dispositif de coupe (60) est configuré pour couper la partie de bande isolante (12) avec une longueur de partie de bande isolante dépendant de la longueur de la gorge d'enroulement (14) à isoler, et que le dispositif d'insertion (140) est configuré pour insérer la partie de bande isolante moulée (12) dans une direction d'insertion orientée dans la direction de la longueur de la partie de bande isolante.

12. Dispositif (20) selon l'une quelconque des revendications 9 à 11,
**caractérisé en ce que**
12.1 chaque élément de maintien (38-41) comporte un premier sous-élément de maintien (128) et un second sous-élément de maintien (130), les sous-éléments de maintien (128, 130) pouvant être déplacés l'un par rapport à l'autre, et/ou
12.2 chaque élément de maintien (38-41) est monté mobile sur le dispositif de transport (42); et
un dispositif d'entraînement de l'élément de maintien (148) pour entraîner le mouvement relatif des sous-éléments de maintien (128, 130) ou le mouvement de l'élément de maintien (38-41) est prévu.

13. Dispositif (20) selon la revendication 12,
**caractérisé en ce que**
le dispositif d'entraînement de l'élément de maintien (148)
13.1 est configuré pour entraîner le mouvement relatif ou le mouvement à un ou plusieurs et/ou en amont d'un ou plusieurs des postes (A-D), et/ou
13.2 est choisi dans le groupe des dispositifs d'entraînement comprenant un entraînement individuel actif, un entraînement individuel séparé, un actionneur, un mouvement de liaison, une liaison fixe et un élément de suivi de liaison et une liaison mécanique pour relier le mouvement de l'élément de maintien ou le mouvement relatif du sous-élément de maintien avec le mouvement du dispositif de transport (42).
